# EUROPEAN PATENT APPLICATION

(11) **EP 4 451 507 A2**
(43) Date of publication of application: **23.10.2024**
(21) Application number: 24164494.7
(22) Date of filing: 19.03.2024
(51) Int. Cl.: H02J 7/00, B25F 5/00, H02J 7/02

(54) **MULTI-WINDING POWER SUPPLY FOR MULTI-VOLTAGE CHARGER**

(30) Priority: 12.04.2023 US 202318299412
(71) Applicant: Techtronic Cordless GP, Anderson, SC 29621 (US)
(72) Inventor: HANKS, Nicolas J., Anderson 29621 (US); BOYLES, Samuel, Anderson 29621 (US)
(74) Representative: Novagraaf Group

(57) **Abstract**

A charger including a first battery pack interface that receives a first battery pack, a second battery pack interface that receives a second battery pack, the second battery pack interface being different than the first battery pack interface, and a primary driver circuit for receiving power from an external power supply, the primary driver circuit including a primary winding. The charger further includes a first secondary winding connected to the first battery pack interface for receiving power from the primary winding and generating a first nominal charging voltage for supply to the first battery pack when the first battery pack is received. The charger further includes a second secondary winding connected to the second battery pack interface for receiving power from the primary winding and generating a second nominal charging voltage for supply to the second battery pack when the second battery pack is received.

## Description

### FIELD OF THE DISCLOSURE

The present disclosure relates to battery chargers.

### SUMMARY OF THE DISCLOSURE

Battery chargers may receive one or more battery packs and charge the one or more battery packs by providing a charging current to each battery pack of the one or more battery packs. Battery chargers may also include an internal power supply (e.g., a converter, a transformer, or the like) to receive power from an external power supply and provide the charging current to charge each battery pack of the one or more battery packs at a nominal charging voltage. Internal power supplies may include a primary winding to receive the charging current from the external power supply and transform the charging current across a secondary winding to achieve the nominal charging voltage, however, known designs may be met with efficiency, safety, and size constraints.

The disclosure provides, in one aspect, a charger including a first battery pack interface, a second battery pack interface, a primary driver circuit, a first secondary winding, and a second secondary winding. The first battery pack interface receives a first battery pack having. The second battery pack interface receives a second battery pack. The second battery pack interface being different than the first battery pack interface. The primary driver circuit receives power from an external power supply. The primary driver circuit includes a primary winding. The first secondary winding is connected to the first battery pack interface for receiving power from the primary winding and generating a first nominal charging voltage for supply to the first battery pack when the first battery pack is received by the first battery pack interface. The second secondary winding is connected to the second battery pack interface for receiving power from the primary winding and generating a second nominal charging voltage for supply to the second battery pack when the second battery pack is received by the second battery pack interface.

In some aspects, the charger further includes a controller and a sensor.

In some aspects, the controller receives a signal from the sensor indicative of a characteristic of at least one selected from a group consisting of the first secondary winding and the second secondary winding. The controller controls the primary driver circuit based on the signal.

In some aspects, the charger further includes a first charger control circuit. The first charger control circuit determines a first output voltage of the first secondary winding. The first charger control circuit regulates, in response to the first output voltage, the first nominal charging voltage.

In some aspects, the charger further includes a second charger control circuit. The second charger control circuit determines a second output voltage of the second secondary winding. The second charger control circuit regulates, in response to the second output voltage, the second nominal charging voltage.

In some aspects, the charger further includes a current sensor connected to the first secondary winding or the second secondary winding.

In some aspects, the current sensor senses a first charging current supplied to the first battery pack and senses a second charging current supplied to the second battery pack.

In some aspects, the first secondary winding generates the first nominal charging voltage based on the first charging current and the second secondary winding generates the second nominal charging voltage based on the second charging current.

In some aspects, the primary driver circuit, the first secondary winding, and the second secondary winding form an LLC converter.

The disclosure provides, in another aspect, a method of operating a charger. The method includes receiving, via a first battery pack interface, a first battery pack. The method further includes receiving, via a second battery pack interface, a second battery pack, the second battery pack interface being different than the first battery pack interface. The method further includes receiving, via a primary driver circuit, power from an external power supply, the primary driver circuit including a primary winding. The method further includes connecting, via the first battery pack interface, a first secondary winding to the first battery pack interface. The method further includes receiving, via the first secondary winding, power from the primary winding. The method further includes generating, via the first secondary winding, a first nominal charging voltage for supply to the first battery pack when the first battery pack is received by the first battery pack interface. The method further includes connecting, via the second battery pack interface, a second secondary winding to the second battery pack interface. The method further includes receiving, via the second secondary winding, power from the primary winding. The method further includes generating, via the second secondary winding, a second nominal charging voltage for supply to the second battery pack when the second battery pack is received by the second battery pack interface.

In some aspects, the method further includes receiving, via a controller, a signal from a sensor indicative of a characteristic of at least one selected from a group consisting of the first secondary winding and the second secondary winding. The method further includes controlling, via the controller, the primary driver circuit based on the signal.

In some aspects, the charger further includes a first charger control circuit. The method further includes determining, via the first charger control circuit, a first output voltage of the first secondary winding and regulating, via the first charger control circuit and in response to the first output voltage, the first nominal charging voltage.

In some aspects, the charger further includes a second charger control circuit. The method further includes determining, via the second charger control circuit, a second output voltage of the second secondary winding and regulating, via the second charger control circuit and in response to the second output voltage, the second nominal charging voltage.

In some aspects, the charger further includes a current sensor connected to the first secondary winding or the second secondary winding.

In some aspects, the method further includes sensing, via the current sensor, a first charging current supplied to the first battery pack and sensing, via the current sensor, a second charging current supplied to the second battery pack.

In some aspects, the first secondary winding generates the first nominal charging voltage based on the first charging current and the second secondary winding generates the second nominal charging voltage based on the second charging current.

The disclosure provides, in another aspect, a charger including a battery pack interface, a primary driver circuit, a first secondary winding, and a second secondary winding. The battery pack interface receives a first battery pack having a first battery pack interface and receives a second battery pack having a second battery pack interface, the second battery pack interface being different than the first battery pack interface. The primary driver circuit receives power from an external power supply. The primary driver circuit includes a primary winding. In response to the battery pack interface receiving the first battery pack, the first secondary winding is connected to the first battery pack interface for receiving power from the primary winding and generates the first nominal charging voltage for supply to the first battery pack. In response to the battery pack interface receiving the second battery pack, the second secondary winding is connected to the second battery pack interface for receiving power from the primary winding and generates the second nominal charging voltage for supply to the second battery pack.

In some aspects, the charger further includes a controller and a sensor.

In some aspects, the controller receives a signal from the sensor indicative of a characteristic of at least one selected from a group consisting of the first secondary winding and the second secondary winding. The controller controls the primary driver circuit based on the signal.

In some aspects, the charger further includes a first charger control circuit. The first charger control circuit determines a first output voltage of the first secondary winding and regulates, in response to the first output voltage, the first nominal charging voltage.

Other aspects of the disclosure will become apparent by consideration of the detailed description and accompanying drawings.

### BRIEF DESCRIPTION OF THE DRAWINGS

FIG. 1 illustrates a system including a battery charger, a first battery pack, and a second battery pack, in accordance with an embodiment of the disclosure.
FIG. 2 illustrates a top view of the battery charger of the system of FIG. 1, in accordance with an embodiment of the disclosure.
FIG. 3 is a schematic of a power supply of a battery charger, in accordance with an embodiment of the disclosure.
FIG. 4 is a schematic of a power supply of a battery charger, in accordance with an embodiment of the disclosure.
FIG. 5 is a schematic of a power supply of a battery charger, in accordance with an embodiment of the disclosure.
FIG. 6 is a block diagram of a system including a battery charger, a first battery pack, and a second battery pack, in accordance with an embodiment of the disclosure.
FIG. 7 is a flow chart of a method for operating a battery charger, in accordance with an embodiment of the disclosure.
FIG. 8 is a schematic of a power supply of a battery charger, in accordance with an embodiment of the disclosure.

Before any embodiments of the disclosure are explained in detail, it is to be understood that the present subject matter is not limited in its application to the details of construction and the arrangement of components set forth in the following description or illustrated in the following drawings. The present subject matter is capable of other embodiments and of being practiced or of being carried out in various ways.

### DETAILED DESCRIPTION

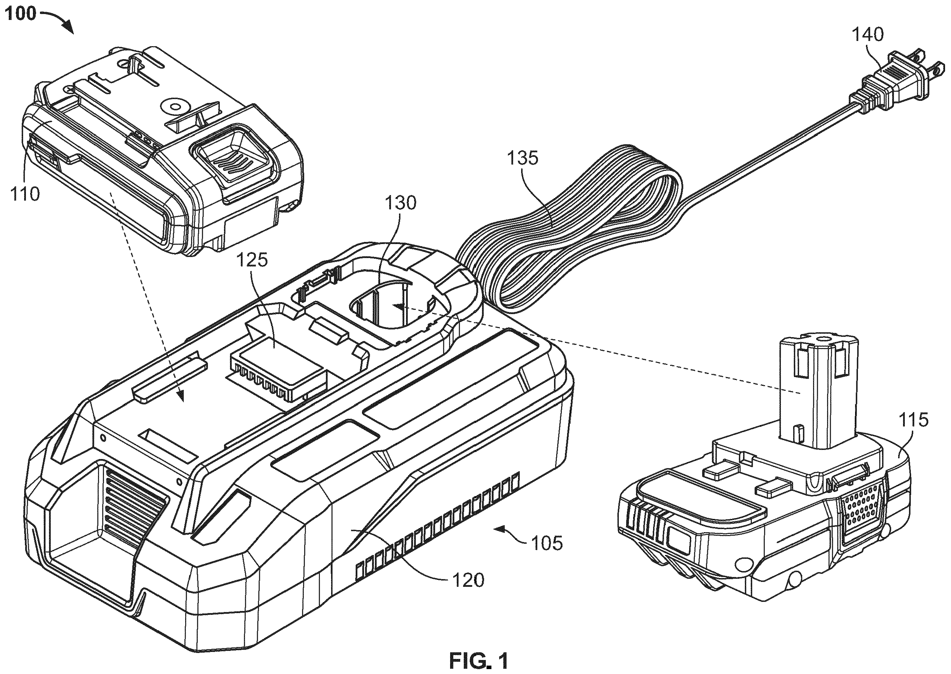

FIG. 1 illustrates a system 100 including a battery charger 105, a first battery pack 110, and a second battery pack 115 according to some embodiments. The battery charger 105 may receive the first battery pack 110 and/or the second battery pack 115. The first battery pack 110 may have a first nominal charging voltage and the second battery pack 115 may have a second nominal charging voltage. In some examples, the first nominal charging voltage may be different than the second nominal charging voltage. When received, the battery charger 105 may charge the first battery pack 110 at the first nominal charging voltage and charge the second battery pack 115 at the second nominal charging voltage. In some examples, the battery charger 105 may receive only the first battery pack 110 or the second battery pack 115. The first battery pack 110 and the second battery pack 115 may each include one or more battery cells, for example, lithium-ion battery cells or any other suitable battery cells. In some examples, the first battery pack 110 and the second battery pack 115 may each be attachable to a power tool (or other electrical device) in order to supply operational power to the power tool when electrically and mechanically connected to the power tool (or other electrical device).

As illustrated, the battery charger 105 may include a housing 120. The housing 120 may include a first battery pack interface 125 and a second battery pack interface 130. In some examples, the first battery pack interface 125 may be different than the second battery pack interface 130. The first battery pack interface 125 may receive the first battery pack 110. The second battery pack interface 130 may receive the second battery pack 115. In some examples, the first battery pack interface 125 may further include a plurality of battery receiving terminals and one or more rails to electrically and mechanically connect the first battery pack 110 to the first battery pack interface 125. In some examples, the second battery pack interface 130 may further include a plurality of battery receiving terminals and one or more rails to electrically and mechanically connect the second battery pack 115 to the second battery pack interface 130. In some examples, when the first battery pack 110 connects to the first battery pack interface 125, the battery charger 105 supplies a first charging current to charge the first battery pack 110 at the first nominal charging voltage. In some examples, when the second battery pack 115 connects to the second battery pack interface 130, the battery charger 105 supplies a second charging current to charge the second battery pack 115 at the second nominal charging voltage.

In some examples, the battery charger 105 may only include the first battery pack interface 125. In such examples, the first battery pack interface 125 may receive both the first battery pack 110 and the second battery pack 115. In such examples, when the first battery pack 110 connects to the first battery pack interface 125, the battery charger 105 supplies the first charging current to charge the first battery pack 110 at the first nominal charging voltage. In such an example, when the second battery pack 115 connects to the first battery pack interface 125, the battery charger 105 supplies the second charging current to charge the second battery pack 115 at the second nominal charging voltage.

The battery charger 105 may further include a power input 135 (for example, a power input cord) and a plug 140. The power input 135 may be electrically and mechanically connected to the plug 140. The plug 140 may be received by an external power supply (e.g., a generator, a wall outlet, or the like) and the power input 135 may be received by the housing 120 to provide operational power to the components of the battery charger 105 via the external power supply.

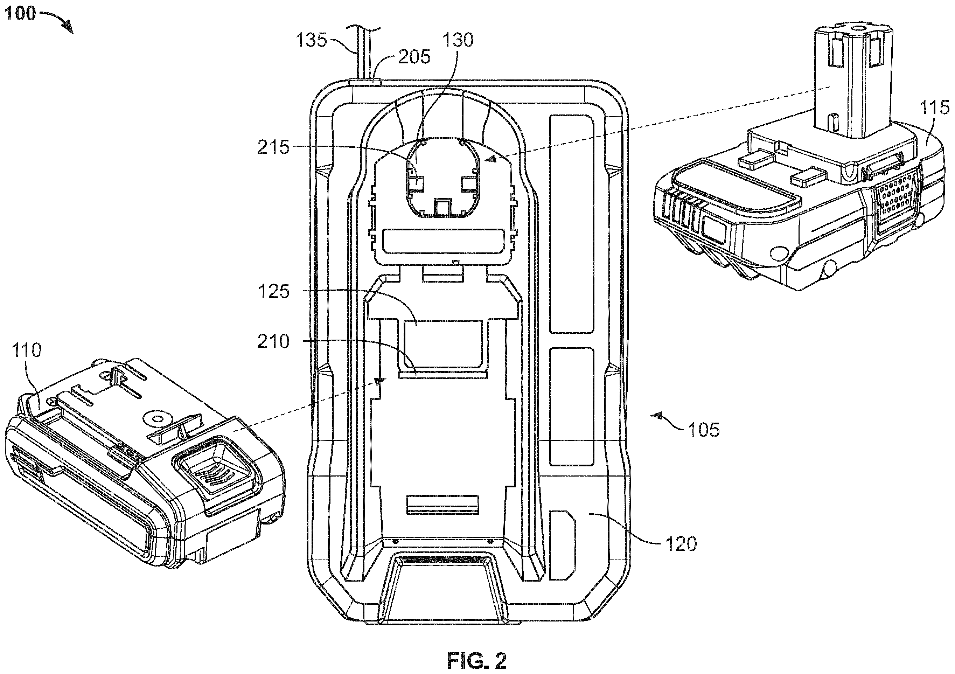

FIG. 2 illustrates a top view of the battery charger 105 according to some embodiments. The battery charger 105 may further include an input receptacle 205. The input receptacle 205 may be disposed on the housing 120 and sized to receive the power input 135. As illustrated in FIG. 2, the first battery pack interface 125 may further include a plurality of first battery receiving terminals 210 and one or more rails to electrically and mechanically connect the first battery pack 110 to the first battery pack interface 125. In some examples, when the first battery pack 110 connects to the first battery pack interface 125, the battery charger 105 supplies the first charging current to charge the first battery pack 110 at the first nominal charging voltage. In some examples, the plurality of first battery receiving terminals 210 provide an electrical and/or communicative connection between the battery charger 105 and the first battery pack 110 when the first battery pack 110 is attached to the battery charger 105. In some examples, the one or more rails provide a mechanical connection between the battery charger 105 and the first battery pack 110 when the first battery pack 110 is attached to the battery charger 105. The second battery pack interface 130 may further include a plurality of second battery receiving terminals 215 and one or more rails to electrically and mechanically connect the second battery pack 115 to the second battery pack interface 130. In some examples, when the second battery pack 115 connects to the second battery pack interface 130, the battery charger 105 supplies the second charging current to charge the second battery pack 115 at the second nominal charging voltage. In some examples, the plurality of second battery receiving terminals 215 provide an electrical and/or communicative connection between the battery charger 105 and the second battery pack 115 when the second battery pack 115 is attached to the battery charger 105. In some examples, the one or more rails provide a mechanical connection between the battery charger 105 and the second battery pack 115 when the second battery pack 115 is attached to the battery charger 105. In some examples, the battery charger 105 may only include the first battery pack interface 125. In such examples, the first battery pack interface 125 includes the plurality of first battery receiving terminals 210 and the plurality of second battery receiving terminals 215.

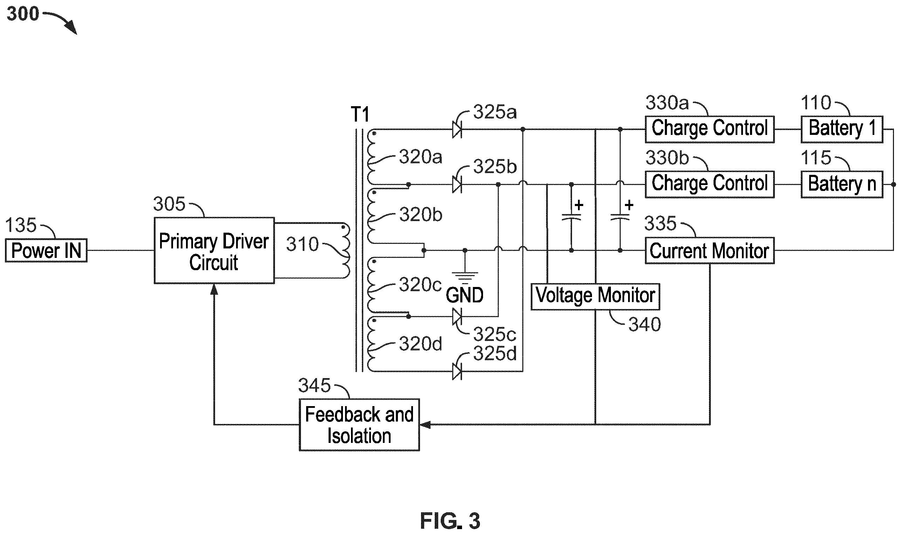

FIG. 3 is a schematic of a power supply 300 of the battery charger 105 according to some embodiments. The power supply 300 may receive power from the power input 135. In some examples, the power input 135 supplies power to a primary driver circuit 305 from the external power supply. The primary driver circuit 305 may further include (or be electrically connected to) a primary winding 310. The primary driver circuit 305 controls an amount of power (e.g., an alternating current at a voltage value from the external power supply) supplied to the primary winding 310. When the primary winding 310 is supplied power, the primary winding 310 may generate a magnetic field that induces a transformed amount of power at a plurality of secondary windings 320a-320d. In some examples, the plurality of secondary windings 320a-320d may provide improved power supply efficiency. For example, the plurality of secondary windings 320a-320d may allow the power supply 300 to operate at an optimum point for the best efficiency at different nominal charging voltages. Each secondary winding of the plurality of secondary windings 320a-320d may include a different number of secondary turns. For example, a first secondary winding 320a may include a first number of secondary turns, a second secondary winding 320b may include a second number of secondary turns, a third secondary winding 320c may include a third number of secondary turns, a fourth secondary winding 320d may include a fourth number of secondary turns, and so on. Based on the number of turns of each secondary winding, a different amount of power may be induced at each secondary winding of the plurality of secondary windings 320a-320d. For example, a first amount of power may be induced at the first secondary winding 320a, a second amount of power may be induced at the second secondary winding 320b, and so on. Based on the amount of power induced at each secondary winding of the plurality of secondary windings 320a-320d, each secondary winding may generate a different nominal charging voltage. In some examples, the primary driver circuit 305, the primary winding 310, the first secondary winding 320a, and the second secondary winding 320b form a resonant LLC converter (i.e., the converter includes two inductors and one capacitor).

In some examples, when the first battery pack 110 connects to the first battery pack interface 125, the first secondary winding 320a may connect to the first battery pack 110. Based on the first amount of power induced at the first secondary winding 320a, the first secondary winding 320a may generate the first nominal charging voltage for supply to the first battery pack 110. In some examples, when the second battery pack 115 connects to the second battery pack interface 130, the second secondary winding 320b may connect to the second battery pack 115. Based on the second amount of power induced at the second secondary winding 320b, the second secondary winding 320b may generate the second nominal charging voltage for supply to the second battery pack 115. In some examples, any number of the plurality of secondary windings 320a-320d may be connected in combination to the first battery pack 110 to generate the first nominal charging voltage for supply to the first battery pack 110. In some examples, any number of the plurality of secondary windings 320a-320d may be connected in combination to the second battery pack 115 to generate the second nominal charging voltage for supply to the second battery pack 115.

Each secondary winding of the plurality of secondary windings 320a-320d may connect to at least one of a plurality of secondary rectifier diodes 325a-325d. Each secondary rectifier diode of the plurality of secondary rectifier diodes 325a-325d may regulate each nominal charging voltage. For example, each secondary rectifier diode of the plurality of secondary rectifier diodes 325a-325d may only allow a positive voltage cycle of each nominal charging voltage to be received by the first battery pack 110 or the second battery pack 115. In some examples, each secondary rectifier diode of the plurality of secondary rectifier diodes 325a-325d may be a diode or a synchronous rectifier or other type of converter/rectifier.

In some examples, the first battery pack 110 may be connected to a first charger control circuit 330a. The first charger control circuit 330a may determine a first output voltage of the first secondary winding 320a based on the positive voltage cycle supplied from each secondary rectifier diode 325a-325d. Based on the first output voltage, the first charger control circuit 330a may regulate the first nominal charging voltage supplied to the first battery pack 110. In some examples, the second battery pack 115 may be connected to a second charger control circuit 330b. The second charger control circuit 330b may determine a second output voltage of the second secondary winding 320b based on the positive voltage cycle supplied from each secondary rectifier diode 325a-325d. Based on the second output voltage, the second charger control circuit 330b may regulate the second nominal charging voltage supplied to the second battery pack 115. In some examples, the first secondary winding 320a and the second secondary winding 320b may allow the first output voltage and the second output voltage to be closer to the first nominal charging voltage and the second nominal charging voltage, respectively, thus reducing the need for additional overcharge protection devices and increasing the safety of the power supply 300.

In some examples, the power supply 300 further includes a current monitoring circuit 335 and a voltage monitoring circuit 340. The current monitoring circuit 335 and the voltage monitoring circuit 340 may be connected to a controller 345, illustrated in FIG. 3 as a feedback and isolation circuit. In some examples, the current monitoring circuit 335 may further include a current sensor. The current sensor may sense a first charging current supplied to the first battery pack 110 and/or a second charging current supplied to the second battery pack 115. In some examples, the use of the current monitoring circuit 335 to monitor the charging current supplied to each battery pack 110, 115 may allow for reduced size and complexity of the power supply 300. In some examples, the voltage monitoring circuit 340 may further include (or be electrically/communicatively coupled to) a voltage sensor. The voltage sensor may sense the first nominal charging voltage supplied to the first battery pack 110 and/or the second nominal charging voltage supplied to the second battery pack 115. The controller 345 may receive a signal from the current sensor and/or the voltage sensor indicative of a characteristic (e.g., a charging current or a nominal charging voltage) of the first secondary winding 320a or the second secondary winding 320b. Based on the signal, the controller 345 may control the primary driver circuit 305. For example, the controller 345 may control the primary driver circuit 305 to increase/decrease the amount of power supplied to the primary winding 310. In some examples, the signal is indicative of the first charging current and the second charging current. In such examples, the primary driver circuit 305 may be controlled by the controller 345 to supply an amount of power to the plurality of secondary windings 320a-320d based on the first charging current and the second charging current. Thus, the first secondary winding 320a may generate the first nominal charging voltage based on the first charging current and the second secondary winding 320b may generate the second nominal charging voltage based on the second charging current.

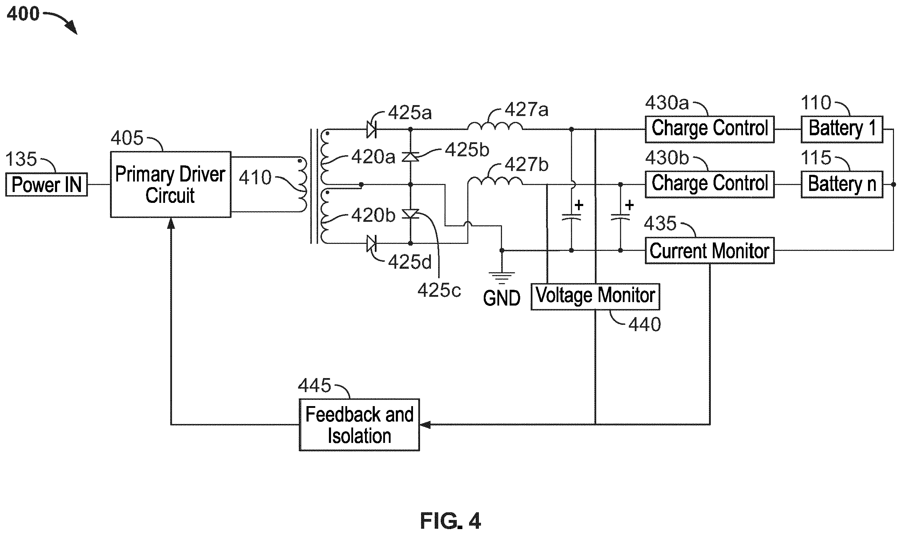

FIG. 4 is a schematic of a power supply 400 of the battery charger 105 according to some embodiments. The power supply 400 may receive power from the power input 135. In some examples, the power input 135 supplies power to a primary driver circuit 405 from the external power supply. The primary driver circuit 405 may further include a primary winding 410. In some examples, the primary driver circuit 405 may be electrically connected to the primary winding 410. The primary driver circuit 405 controls an amount of power (e.g., an alternating current at a voltage value from the external power supply) supplied to the primary winding 410. When the primary winding 410 is supplied power, the primary winding 410 may generate a magnetic field that induces a transformed amount of power at a plurality of secondary windings 420a-420b. In some examples, the plurality of secondary windings 420a-420b may provide improved power supply efficiency. For example, the plurality of secondary windings 420a-420b may allow the power supply 400 to operate at an optimum point for the best efficiency at different nominal charging voltages. Each secondary winding of the plurality of secondary windings 420a-420b may include a different number of secondary turns. For example, a first secondary winding 420a may include a first number of secondary turns, a second secondary winding 420b may include a second number of secondary turns, and so on. Based on the number of turns of each secondary winding, a different amount of power may be induced at each secondary winding of the plurality of secondary windings 420a-420b. For example, a first amount of power may be induced at the first secondary winding 420a, a second amount of power may be induced at the second secondary winding 420b, and so on. Based on the amount of power induced at each secondary winding of the plurality of secondary windings 420a-420b, each secondary winding may generate a different nominal charging voltage. In some examples, the primary driver circuit 405, the primary winding 410, the first secondary winding 420a, and the second secondary winding 420b form a forward converter.

In some examples, when the first battery pack 110 connects to the first battery pack interface 125, the first secondary winding 420a may connect to the first battery pack 110. Based on the first amount of power induced at the first secondary winding 420a, the first secondary winding 420a may generate the first nominal charging voltage for supply to the first battery pack 110. In some examples, when the second battery pack 115 connects to the second battery pack interface 130, the second secondary winding 420b may connect to the second battery pack 115. Based on the second amount of power induced at the second secondary winding 420b, the second secondary winding 420b may generate the second nominal charging voltage for supply to the second battery pack 115. In some examples, any number of the plurality of secondary windings 420a-420b may be connected in combination to the first battery pack 110 to generate the first nominal charging voltage for supply to the first battery pack 110. In some examples, any number of the plurality of secondary windings 420a-420b may be connected in combination to the second battery pack 115 to generate the second nominal charging voltage for supply to the second battery pack 115.

Each secondary winding of the plurality of secondary windings 420a-420b may connect to at least one of a plurality of secondary rectifier diodes 425a-425d. Each secondary rectifier diode of the plurality of secondary rectifier diodes 425a-425d may regulate each nominal charging voltage. For example, each secondary rectifier diode of the plurality of secondary rectifier diodes 425a-425d may only allow a positive voltage cycle of each nominal charging voltage to be received by the first battery pack 110 or the second battery pack 115. In some examples, each secondary rectifier diode of the plurality of secondary rectifier diodes 425a-425d may be a diode or a synchronous rectifier. In some examples, a first inductor 427a may be connected between the plurality of secondary rectifier diodes 425a-425d and the first battery pack 110 to limit the charging current supplied to the first battery pack 110. In some examples, a second inductor 427b may be connected between the plurality of secondary rectifier diodes 425a-425d and the second battery pack 115 to limit the charging current supplied to the second battery pack 115.

In some examples, the first battery pack 110 may be connected to a first charger control circuit 430a. The first charger control circuit 430a may determine a first output voltage of the first secondary winding 420a based on the positive voltage cycle supplied from each secondary rectifier diode 425a-425d. Based on the first output voltage, the first charger control circuit 430a may regulate the first nominal charging voltage supplied to the first battery pack 110. In some examples, the second battery pack 115 may be connected to a second charger control circuit 430b. The second charger control circuit 430b may determine a second output voltage of the second secondary winding 420b based on the positive voltage cycle supplied from each secondary rectifier diode 425a-425d. Based on the second output voltage, the second charger control circuit 430b may regulate the second nominal charging voltage supplied to the second battery pack 115. In some examples, the first secondary winding 420a and the second secondary winding 420b may allow the first output voltage and the second output voltage to be closer to the first nominal charging voltage and the second nominal charging voltage, respectively, thus reducing the need for additional overcharge protection devices and increasing the safety of the power supply 400. In some examples, a first secondary rectifier diode 425a may be placed in parallel with a second secondary reference diode 425b. By placing the first secondary rectifier diode 425a in parallel the second secondary reference diode 425b, the power supply 400 may be reset during an off time (e.g., a time when no magnetic field is generated by the primary winding 410) of the power supply 400. In some examples, resetting the power supply 400 may provide a greater output power efficiency and lower output ripple current from the first secondary winding 420a and/or the second secondary winding 420b.

In some examples, the power supply 400 further includes a current monitoring circuit 435 and a voltage monitoring circuit 440. The current monitoring circuit 435 and the voltage monitoring circuit 440 may be connected to a controller 445, illustrated in FIG. 4 as a feedback and isolation circuit. In some examples, the current monitoring circuit 435 may further include a current sensor. The current sensor may sense a first charging current supplied to the first battery pack 110 and/or a second charging current supplied to the second battery pack 115. In some examples, the use of the current monitoring circuit 435 to monitor the charging current supplied to each battery pack 110, 115 may allow for reduced size and complexity of the power supply 400. In some examples, the voltage monitoring circuit 440 may further include a voltage sensor. The voltage sensor may sense the first nominal charging voltage supplied to the first battery pack 110 and/or the second nominal charging voltage supplied to the second battery pack 115. The controller 445 may receive a signal from the current sensor or the voltage sensor indicative of a characteristic (e.g., a charging current or a nominal charging voltage) of the first secondary winding 420a or the second secondary winding 420b. Based on the signal, the controller 445 may control the primary driver circuit 405. For example, the controller 445 may control the primary driver circuit 405 to limit the amount of power supplied to the primary winding 410. In some examples, the signal is indicative of the first charging current and the second charging current. In such examples, the primary driver circuit 405 may be controlled by the controller 445 to supply an amount of power to the plurality of secondary windings 420a-420b based on the first charging current and the second charging current. Thus, the first secondary winding 420a may generate the first nominal charging voltage based on the first charging current and the second secondary winding 420b may generate the second nominal charging voltage based on the second charging current.

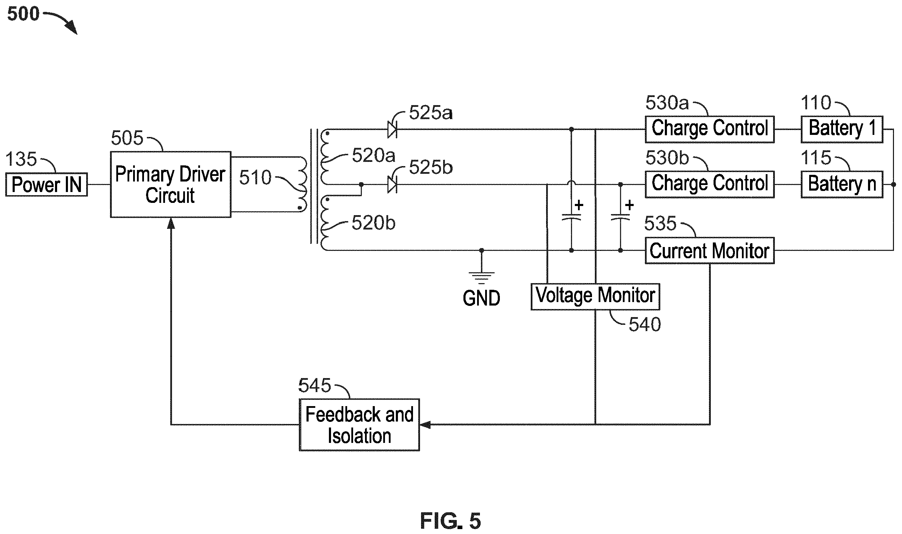

FIG. 5 is a schematic of a power supply 500 of the battery charger 105 according to some embodiments. The power supply 500 may receive power from the power input 135. In some examples, the power input 135 supplies power to a primary driver circuit 505 from the external power supply. The primary driver circuit 505 may further include a primary winding 510. In some examples, the primary driver circuit 505 may be electrically connected to the primary winding 510. The primary driver circuit 505 controls an amount of power (e.g., an alternating current at a voltage value from the external power supply) supplied to the primary winding 510. When the primary winding 510 is supplied power, the primary winding 510 may generate a magnetic field that induces a transformed amount of power at a plurality of secondary windings 520a-520b. In some examples, the plurality of secondary windings 520a-520b may provide improved power supply efficiency. For example, the plurality of secondary windings 520a-520b may allow the power supply 500 to operate at an optimum point for the best efficiency at different nominal charging voltages. Each secondary winding of the plurality of secondary windings 520a-520b may include a different number of secondary turns. For example, a first secondary winding 520a may include a first number of secondary turns, a second secondary winding 520b may include a second number of secondary turns, and so on. Based on the number of turns of each secondary winding, a different amount of power may be induced at each secondary winding of the plurality of secondary windings 520a-520b. For example, a first amount of power may be induced at the first secondary winding 520a, a second amount of power may be induced at the second secondary winding 520b, and so on. Based on the amount of power induced at each secondary winding of the plurality of secondary windings 520a-520b, each secondary winding may generate a different nominal charging voltage. In some examples, the primary driver circuit 505, the primary winding 510, the first secondary winding 520a, and the second secondary winding 520b form a flyback converter.

In some examples, when the first battery pack 110 connects to the first battery pack interface 125, the first secondary winding 520a may connect to the first battery pack 110. Based on the first amount of power induced at the first secondary winding 520a, the first secondary winding 520a may generate the first nominal charging voltage for supply to the first battery pack 110. In some examples, when the second battery pack 115 connects to the second battery pack interface 130, the second secondary winding 520b may connect to the second battery pack 115. Based on the second amount of power induced at the second secondary winding 520b, the second secondary winding 520b may generate the second nominal charging voltage for supply to the second battery pack 115. In some examples, any number of the plurality of secondary windings 520a-520b may be connected in combination to the first battery pack 110 to generate the first nominal charging voltage for supply to the first battery pack 110. In some examples, any number of the plurality of secondary windings 520a-520b may be connected in combination to the second battery pack 115 to generate the second nominal charging voltage for supply to the second battery pack 115.

Each secondary winding of the plurality of secondary windings 520a-520b may connect to at least one of a plurality of secondary rectifier diodes 525a-525b. Each secondary rectifier diode of the plurality of secondary rectifier diodes 525a-525b may regulate each nominal charging voltage. For example, each secondary rectifier diode of the plurality of secondary rectifier diodes 525a-525b may only allow a positive voltage cycle of each nominal charging voltage to be received by the first battery pack 110 or the second battery pack 115. In some examples, each secondary rectifier diode of the plurality of secondary rectifier diodes 525a-525b may be a diode or a synchronous rectifier.

In some examples, the first battery pack 110 may be connected to a first charger control circuit 530a. The first charger control circuit 530a may determine a first output voltage of the first secondary winding 520a based on the positive voltage cycle supplied from each secondary rectifier diode 525a-525d. Based on the first output voltage, the first charger control circuit 530a may regulate the first nominal charging voltage supplied to the first battery pack 110. In some examples, the second battery pack 115 may be connected to a second charger control circuit 530b. The second charger control circuit 530b may determine a second output voltage of the second secondary winding 520b based on the positive voltage cycle supplied from each secondary rectifier diode 525a-525b. Based on the second output voltage, the second charger control circuit 530b may regulate the second nominal charging voltage supplied to the second battery pack 115. In some examples, the first secondary winding 520a and the second secondary winding 520b may allow the first output voltage and the second output voltage to be closer to the first nominal charging voltage and the second nominal charging voltage, respectively, thus reducing the need for additional overcharge protection devices and increasing the safety of the power supply 500.

In some examples, the power supply 500 further includes a current monitoring circuit 535 and a voltage monitoring circuit 540. The current monitoring circuit 535 and the voltage monitoring circuit 540 may be connected to a controller 545, illustrated in FIG. 5 as a feedback and isolation circuit. In some examples, the current monitoring circuit 535 may further include a current sensor. The current sensor may sense a first charging current supplied to the first battery pack 110 and/or a second charging current supplied to the second battery pack 115. In some examples, the use of the current monitoring circuit 535 to monitor the charging current supplied to each battery pack 110, 115 may allow for reduced size and complexity of the power supply 500. In some examples, the voltage monitoring circuit 540 may further include a voltage sensor. The voltage sensor may sense the first nominal charging voltage supplied to the first battery pack 110 and/or the second nominal charging voltage supplied to the second battery pack 115. The controller 545 may receive a signal from the current sensor or the voltage sensor indicative of a characteristic (e.g., a charging current or a nominal charging voltage) of the first secondary winding 520a or the second secondary winding 520b. Based on the signal, the controller 545 may control the primary driver circuit 505. For example, the controller 545 may control the primary driver circuit 505 to limit the amount of power supplied to the primary winding 510. In some examples, the signal is indicative of the first charging current and the second charging current. In such examples, the primary driver circuit 505 may be controlled by the controller 545 to supply an amount of power to the plurality of secondary windings 520a-520b based on the first charging current and the second charging current. Thus, the first secondary winding 520a may generate the first nominal charging voltage based on the first charging current and the second secondary winding 520b may generate the second nominal charging voltage based on the second charging current.

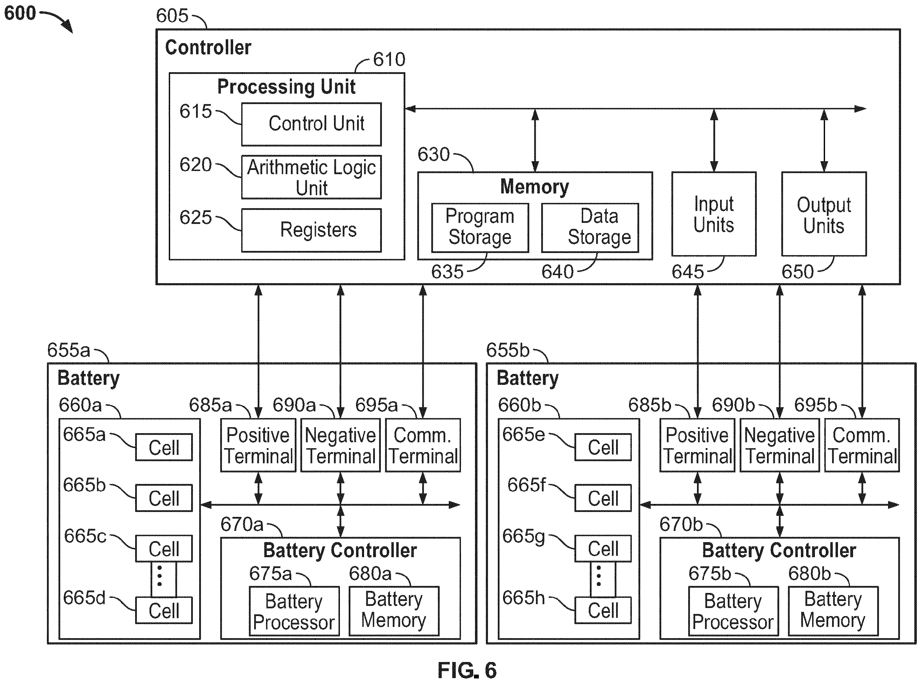

In some examples, the battery charger 105 may include a control system 600 for suppling an amount of power to the first battery pack 110 and/or the second battery pack 115. In some examples, the control system 600 may be any one of the controllers 345, 445, 545. FIG. 6 is a block diagram of the control system 600 of the battery charger 105, according to some examples. The control system 600 may include a controller 605, as well as other components not pictured in FIG. 6, for example a motor, a solenoid, and/or other mechanical and/or electrical components described above. In some examples, the primary driver circuit 305, 405, 505 may include the controller 605. The controller 605 may include a processing unit 610 comprising a control unit 615, an arithmetic logic unit 620, and one or more registers 625. The controller 605 may further include a memory 630 consisting of program storage 635 and/or data storage 640. The memory 630 may be flash memory, random access memory, solid state memory, another type of memory, or a combination of these types. The controller 605 may further include one or more input units 645 and/or output units 650. In some examples, the one or more input units 645 may be configured to receive a plurality of inputs such as a signal indicative of the characteristic (e.g., the charging current or the nominal charging voltage) of the first secondary winding 320a, 420a, 520a or the second secondary winding 320b, 420b, 520b. In some embodiments, the one or more output units 650 may be configured to transmit a plurality of outputs such as a signal to control the amount of power provided to the primary winding 310, 410, 510, a signal to control a plurality of light-emitting diodes (LEDs), or a signal to control a plurality of FETs of the motor.

In some examples, the memory 630 is a non-transitory computer readable medium that includes, for example, a program storage area and a data storage area. The program storage area and the data storage area can include combinations of different types of memory, such as read-only memory ("ROM"), random access memory ("RAM") (e.g., dynamic RAM ["DRAM"], synchronous DRAM ["SDRAM"], etc.), electrically erasable programmable read-only memory ("EEPROM"), flash memory, a hard disk, an SD card, or other suitable magnetic, optical, physical, or electronic memory devices. The processing unit 610 is connected to the memory 630 and executes software instructions that are capable of being stored in a RAM of the memory 630 (e.g., during execution), a ROM of the memory 630 (e.g., on a generally permanent basis), or another non-transitory computer readable medium such as another memory or a disc. Software included in the implementation of the primary driver circuit 305, 405, 505, the first battery pack 110, or the second battery pack 115 can be stored in the memory 630 of the controller 605. The software includes, for example, firmware, one or more applications, program data, filters, rules, one or more program modules, and other executable instructions. The controller 605 may retrieve from memory and execute, among other things, instructions related to the control of the charging of the first battery pack 110 or the second battery pack 115 described herein. In other constructions, the controller 605 includes additional, fewer, or different components.

A first battery pack 655a, such as the first battery pack 110, may include a stack 660a consisting of one or more battery cells 665a-665d. In some examples, the one or more battery cells 665a-665d (e.g., lithium ion cells or cells having similar chemistry) are electrically connected to each other in a series-type manner. In other examples, the one or more battery cells 665a-665d are electrically connected to each other in a parallel-type manner. In still other examples, the one or more battery cells 665a-665d are electrically connected to each other in a combination of a series-type and a parallel-type manner. The first battery pack 655a may further include a battery controller 670a consisting of a battery processor 675a and a battery memory 680a. The first battery pack 655a may further include a positive battery terminal 685a and a negative battery terminal 690a. The positive battery terminal 685a and the negative battery terminal 690a may be configured to electrically and/or mechanically couple to the first battery receiving terminals 210 and/or the second battery receiving terminals 215 of the battery charger 105. In some examples, the first battery pack 655a includes a communication terminal 695a, which may be configured to electrically, mechanically, and/or communicatively couple to one or more communication terminals of the battery charger 105. In some examples, the first battery pack 655a may further include a first temperature sensor. The first temperature sensor may sense first battery temperature information (e.g., a temperature of the one or more battery cells 665a-665d) and transmit the first battery temperature information to the controller 605 via the communication terminal 695a. The controller 605 may control the charging current supplied to the one or more battery cells 665a-665d based on the first battery temperature information.

In some examples, such as the block diagram of FIG. 6, the one or more battery cells 665a-665d are connected to the battery controller 670a. The battery controller 670a controls the power delivered to the positive battery terminal 685a and the negative battery terminal 690a (for example, via control of a discharge field-effect transistor (FET), a charge FET, and/or other FETs located within the battery pack). In some embodiments, the battery controller 670a controls the power by allowing or prohibiting power. Additionally, in some embodiments, the battery controller 670a controls the power by allowing a percentage of power generated by the one or more battery cells 665a-665d to be output. In some embodiments, the amount of power delivered between the battery terminals 685a, 690a is approximately 100% of power possibly generated by the one or more battery cells 665a-665d.

A second battery pack 655b, such as the second battery pack 115, may include a stack 660b consisting of one or more battery cells 665e-665h. In some examples, the one or more battery cells 665e-665h (e.g., lithium ion cells or cells having similar chemistry) are electrically connected to each other in a series-type manner. In other examples, the one or more battery cells 665e-665h are electrically connected to each other in a parallel-type manner. In still other examples, the one or more battery cells 665e-665h are electrically connected to each other in a combination of a series-type and a parallel-type manner. The second battery pack 655b may further include a battery controller 670b consisting of a battery processor 675b and a battery memory 680b. The second battery pack 655b may further include a positive battery terminal 685b and a negative battery terminal 690b. The positive battery terminal 685b and the negative battery terminal 690b may be configured to electrically and/or mechanically couple to the first battery receiving terminals 210 and/or the second battery receiving terminals 215 of the battery charger 105. In some examples, the second battery pack 655b includes a communication terminal 695b, which may be configured to electrically, mechanically, and/or communicatively couple to one or more communication terminals of the battery charger 105. In some examples, the second battery pack 655b may further include a second temperature sensor. The second temperature sensor may sense second battery temperature information (e.g., a temperature of the one or more battery cells 665e-665h) and transmit the second battery temperature information to the controller 605 via the communication terminal 695b. The controller 605 may control the charging current supplied to the one or more battery cells 665e-665h based on the second battery temperature information.

In some examples, such as the block diagram of FIG. 6, the one or more battery cells 665e-665h are connected to the battery controller 670b. The battery controller 670b controls the power delivered to the positive battery terminal 685b and the negative battery terminal 690b (for example, via control of a discharge field-effect transistor (FET), a charge FET, and/or other FETs located within the battery pack). In some embodiments, the battery controller 670b controls the power by allowing or prohibiting power. Additionally, in some embodiments, the battery controller 670b controls the power by allowing a percentage of power generated by the one or more battery cells 665e-665h to be output. In some embodiments, the amount of power delivered between the battery terminals 685b, 690b is approximately 100% of power possibly generated by the one or more battery cells 665e-665h.

In some embodiments, the controller 605 receives a first battery voltage signal, indicative of a first voltage (or the first nominal charging voltage of the first secondary winding 320a, 420a, 520a), from the battery terminals 685a, 690a. In such an embodiment, the controller 605 may receive the first battery voltage signal via a sensor located within the first battery pack 655a or the battery charger 105. In other embodiments, the controller 605 receives the first battery voltage signal from the communication terminal 695a. The controller 605 may also receive a second battery voltage signal, indicative of a second voltage (or the second nominal charging voltage of the second secondary winding 320b, 420b, 520b), from the battery terminals 685b, 690b. In such an embodiment, the controller 605 may receive the second battery voltage signal via a sensor located within the second battery pack 655b or the battery charger 105. In other embodiments, the controller 605 receives the second battery voltage signal from the communication terminal 695a. In some embodiments, the controller 605 may control the primary driver circuit 305, 405, 505 based on the first battery voltage signal and the second battery voltage signal. For example, the controller 605 may control the primary driver circuit 305, 405, 505 to limit the power supplied to the primary winding 310, 410, 510.

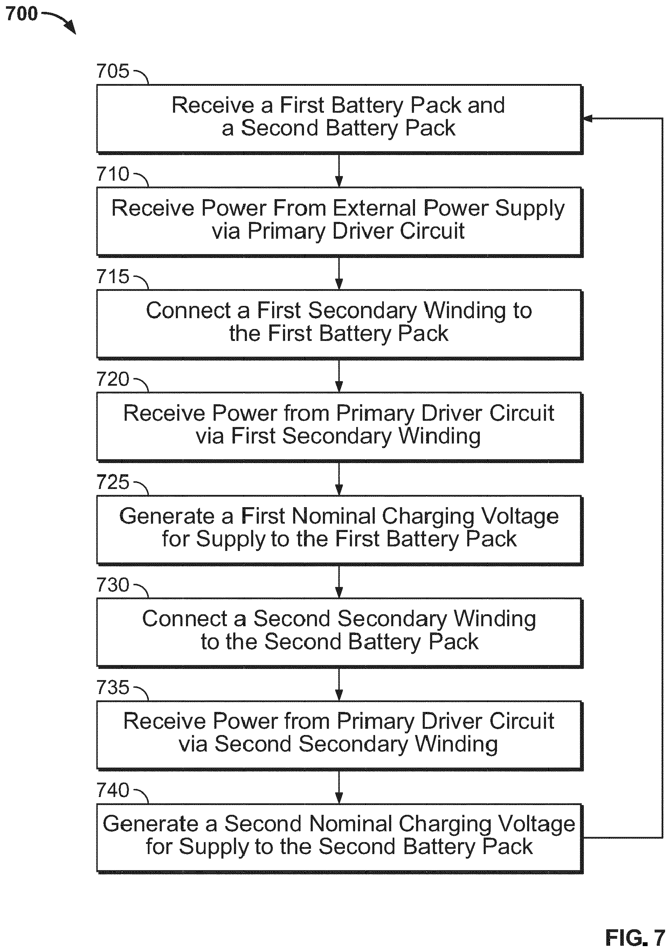

FIG. 7 is a flowchart illustrating a method 700 for operating a battery charger 105 of a system 100, according to some embodiments. It should be understood that the order of the steps disclosed in the method 700 could vary. For example, additional steps may be added to the process and not all of the steps may be required, or steps shown in one order may occur in a second order. The method 700 begins at step 705 when battery charger 105 receives the first battery pack 110 (e.g., the first battery pack interface 125 receives the first battery pack 110 having the first nominal charging voltage) and the battery charger 105 receives the second battery pack 115 (e.g., the second battery pack interface 130 receives the second battery pack 115 having the second nominal charging voltage). In some examples, the second battery pack interface 130 may be different than the first battery pack interface 125. The method 700 then proceeds to step 710.

At step 710, the primary driver circuit 305, 405, 505 receives an amount of power from the external power supply via the power input 135. In some examples, the primary driver circuit 305, 405, 505 may include the primary winding 310, 410, 510. The method 700 then proceeds to step 715. At step 715, when the first battery pack 110 is received by the first battery pack interface 125, the first secondary winding 320a, 420a, 520a connects to the first battery pack 110 via the first battery pack interface 125. The method 700 then proceeds to step 720. At step 720, the first secondary winding 320a, 420a, 520a receives an amount of power from the primary driver circuit 305, 405, 505 via the primary winding 310, 410, 510. The method 700 then proceeds to step 725.

At step 725, the first secondary winding 320a, 420a, 520a generates the first nominal charging voltage for supply to the first battery pack 110 based on the amount of power received from the primary driver circuit 305, 405, 505 and the first number of secondary turns of the first secondary winding 320a, 420a, 520a. The method 700 then proceeds to step 730. At step 730, when the second battery pack 115 is received by the second battery pack interface 130, the second secondary winding 320b, 420b, 520b connects to the second battery pack 115 via the second battery pack interface 130. The method 700 then proceeds to step 735. At step 735, the second secondary winding 320b, 420b, 520b receives the amount of power from the primary driver circuit 305, 405, 505 via the primary winding 310, 410, 510. The method 700 then proceeds to step 740.

At step 740, the second secondary winding 320b, 420b, 520b generates the second nominal charging voltage for supply to the second battery pack 115 based on the amount of power received from the primary driver circuit 305, 405, 505 and the second number of secondary turns of the second secondary winding 320b, 420b, 520b. Once the second nominal charging voltage is generated by the second secondary winding 320b, 420b, 520b at step 740, the method 700 may return to step 710 to continue receiving the amount of power from the external power supply at the primary driver circuit 305, 405, 505 until the first battery pack 110 reaches a first charge threshold and the second battery pack 115 reaches a second charge threshold. The first charge threshold may be indicative of the first battery pack 110 being sufficiently charged. Likewise, the second charge threshold may be indicative of the second battery pack 115 being sufficiently charged.

In some examples, as described above, the battery charger 105 may only include the first battery pack interface 125. In such examples, the first battery pack interface 125 may receive both the first battery pack 110 and the second battery pack 115. In such examples, when the first battery pack 110 connects to the first battery pack interface 125, the battery charger 105 may perform steps 710-725 as described above. Once the first nominal charging voltage is generated by the first secondary winding 320a, 420a, 520a at step 725, the method 700 may return to step 710 to continue receiving the amount of power from the external power supply at the primary driver circuit 305, 405, 505 until the first battery pack 110 reaches the first charge threshold. In such examples, then the second battery pack 115 connects to the second battery pack interface 130, the battery charger 105 may perform steps 710 and 730-740 as described above. Once the second nominal charging voltage is generated by the second secondary winding 320b, 420b, 520b at step 740, the method 700 may return to step 710 to continue receiving the amount of power from the external power supply at the primary driver circuit 305, 405, 505 until the second battery pack 115 reaches the second charge threshold.

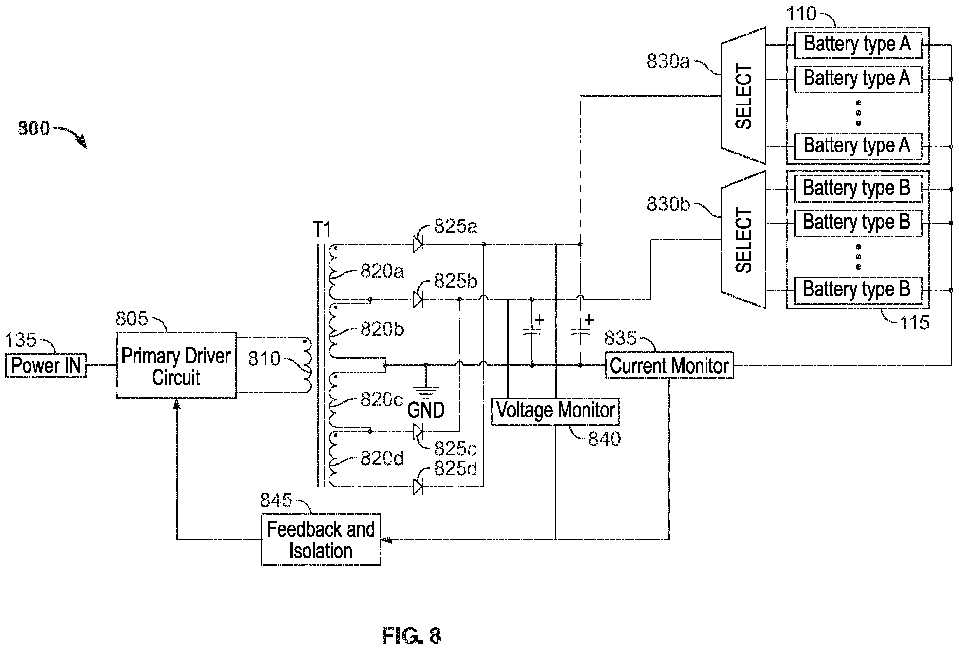

FIG. 8 is a schematic of a power supply 800 of the battery charger 105 according to some embodiments. The power supply 800 may receive power from the power input 135. In some examples, the power input 135 supplies power to a primary driver circuit 805 from the external power supply. The primary driver circuit 805 may further include (or be electrically connected to) a primary winding 810. The primary driver circuit 805 controls an amount of power (e.g., an alternating current at a voltage value from the external power supply) supplied to the primary winding 810. When the primary winding 810 is supplied power, the primary winding 810 may generate a magnetic field that induces a transformed amount of power induced at a plurality of secondary windings 820a-820d. In some examples, the plurality of secondary windings 820a-820d may provide improved power supply efficiency. For example, the plurality of secondary windings 820a-820d may allow the power supply 800 to operate at an optimum point for the best efficiency at different nominal charging voltages. Each secondary winding of the plurality of secondary windings 820a-820d may include a different number of secondary turns. For example, a first secondary winding 820a may include a first number of secondary turns, a second secondary winding 820b may include a second number of secondary turns, a third secondary winding 820c may include a third number of secondary turns, a fourth secondary winding 820d may include a fourth number of secondary turns, and so on. Based on the number of turns of each secondary winding, a different amount of power may be induced at each secondary winding of the plurality of secondary windings 820a-820d. For example, a first amount of power may be induced at the first secondary winding 820a, a second amount of power may be induced at the second secondary winding 820b, and so on. Based on the amount of power induced at each secondary winding of the plurality of secondary windings 820a-820d, each secondary winding may generate a different nominal charging voltage. In some examples, the primary driver circuit 805, the primary winding 810, the first secondary winding 820a, and the second secondary winding 820b form a resonant LLC converter (i.e., the converter includes two inductors and one capacitor).

In some examples, when the first battery pack 110 connects to the first battery pack interface 125, the first secondary winding 820a may connect to the first battery pack 110. Based on the first amount of power induced at the first secondary winding 820a, the first secondary winding 820a may generate the first nominal charging voltage for supply to the first battery pack 110. In some examples, when the second battery pack 115 connects to the second battery pack interface 130, the second secondary winding 820b may connect to the second battery pack 115. Based on the second amount of power induced at the second secondary winding 820b, the second secondary winding 820b may generate the second nominal charging voltage for supply to the second battery pack 115. In some examples, any number of the plurality of secondary windings 820a-820d may be connected in combination to the first battery pack 110 to generate the first nominal charging voltage for supply to the first battery pack 110. In some examples, any number of the plurality of secondary windings 820a-820d may be connected in combination to the second battery pack 115 to generate the second nominal charging voltage for supply to the second battery pack 115. In some examples, the battery charger 105 includes a third battery pack interface. The third battery pack interface may connect to a third battery pack. In some examples, the third battery pack may be one of the first battery pack 110 or the second battery pack 115. In other examples, the third battery pack may be a different battery pack (e.g., the third battery pack including a third nominal charging voltage) than the first battery pack 110 or the second battery pack 115. When the third battery pack connects to the third battery pack interface, the third secondary winding 820c may connect to the third battery pack. Based on a third amount of power induced at the third secondary winding 820c, the third secondary winding 820c may generate the third nominal charging voltage for supply to the third battery pack. In some examples, any number of the plurality of secondary windings 820a-820d may be connected in combination to the third battery pack to generate the third nominal charging voltage for supply to the third battery pack.

Each secondary winding of the plurality of secondary windings 820a-820d may connect to at least one of a plurality of secondary rectifier diodes 825a-825d. Each secondary rectifier diode of the plurality of secondary rectifier diodes 825a-825d may regulate each nominal charging voltage. For example, each secondary rectifier diode of the plurality of secondary rectifier diodes 825a-825d may only allow a positive voltage cycle of each nominal charging voltage to be received by the first battery pack 110 or the second battery pack 115. In some examples, each secondary rectifier diode of the plurality of secondary rectifier diodes 825a-825d may be a diode or a synchronous rectifier or other type of converter/rectifier.

In some examples, the first battery pack 110 may be connected to a first charger control circuit 830a. The first charger control circuit 830a may determine a first output voltage of the first secondary winding 820a based on the positive voltage cycle supplied from each secondary rectifier diode 825a-825d. Based on the first output voltage, the first charger control circuit 830a may regulate the first nominal charging voltage supplied to the first battery pack 110. In some examples, the second battery pack 115 may be connected to a second charger control circuit 830b. The second charger control circuit 830b may determine a second output voltage of the second secondary winding 820b based on the positive voltage cycle supplied from each secondary rectifier diode 825a-825d. Based on the second output voltage, the second charger control circuit 830b may regulate the second nominal charging voltage supplied to the second battery pack 115. In some examples, the first secondary winding 820a and the second secondary winding 820b may allow the first output voltage and the second output voltage to be closer to the first nominal charging voltage and the second nominal charging voltage, respectively, thus reducing the need for additional overcharge protection devices and increasing the safety of the power supply 800.

In some examples, the power supply 800 further includes a current monitoring circuit 835 and a voltage monitoring circuit 840. The current monitoring circuit 835 and the voltage monitoring circuit 840 may be connected to a controller 845, illustrated in FIG. 8 as a feedback and isolation circuit. In some examples, the current monitoring circuit 835 may further include a current sensor. The current sensor may sense a first charging current supplied to the first battery pack 110 and/or a second charging current supplied to the second battery pack 115. In some examples, the use of the current monitoring circuit 835 to monitor the charging current supplied to each battery pack 110, 115 may allow for reduced size and complexity of the power supply 800. In some examples, the voltage monitoring circuit 840 may further include (or be electrically/communicatively coupled to) a voltage sensor. The voltage sensor may sense the first nominal charging voltage supplied to the first battery pack 110 and/or the second nominal charging voltage supplied to the second battery pack 115. The controller 845 may receive a signal from the current sensor and/or the voltage sensor indicative of a characteristic (e.g., a charging current or a nominal charging voltage) of the first secondary winding 820a or the second secondary winding 820b. Based on the signal, the controller 845 may control the primary driver circuit 805. For example, the controller 845 may control the primary driver circuit 805 to increase/decrease the amount of power supplied to the primary winding 810. In some examples, the signal is indicative of the first charging current and the second charging current. In such examples, the primary driver circuit 805 may be controlled by the controller 845 to supply an amount of power to the plurality of secondary windings 820a-820d based on the first charging current and the second charging current. Thus, the first secondary winding 820a may generate the first nominal charging voltage based on the first charging current and the second secondary winding 820b may generate the second nominal charging voltage based on the second charging current.

In some examples, the battery charger 105 including the power supply 800 performs the method 700. In such examples, steps 705-725 are performed in the same manner as described above with reference to FIG. 7. At step 725, the first secondary winding 820a generates the first nominal charging voltage for supply to the first battery pack 110 based on the amount of power received from the primary driver circuit 805 and the first number of secondary turns of the first secondary winding 820a. When the battery charger 105 includes the power supply 800, the method 700 may proceed to step 730 after the first battery pack 110 is fully charged. For example, when the first battery pack 110 is charged to 100% battery capacity based on the first nominal charging voltage received from the first secondary winding 820a, the method 700 proceeds to step 730, which is commonly referred to as sequential charging. After the first battery pack 110 is fully charged, steps 730-740 are performed in the same manner as described above with reference to FIG. 7 for the second battery pack 115. At step 740, when the second secondary winding 820b generates the second nominal charging voltage for supply to the second battery pack 115, the method 700 may return to step 710 after the second battery pack 115 is fully charged. For example, when the second battery pack 115 is charged to 100% battery capacity based on the second nominal charging voltage received from the second secondary winding 820b, the method 700 returns to step 710.

Although the present subject matter has been described in detail with reference to certain preferred embodiments, variations and modifications exist within the scope of one or more independent aspects of the present subject matter as described.

## Claims

1. A charger comprising:
a first battery pack interface configured to receive a first battery pack;
a second battery pack interface configured to receive a second battery pack, the second battery pack interface being different than the first battery pack interface;
a primary driver circuit for receiving power from an external power supply, the primary driver circuit including a primary winding;
a first secondary winding connected to the first battery pack interface, the first secondary winding configured to receive power from the primary winding and generate a first nominal charging voltage for supply to the first battery pack when the first battery pack is received by the first battery pack interface; and
a second secondary winding connected to the second battery pack interface, the first secondary winding configured to receive power from the primary winding and generate a second nominal charging voltage for supply to the second battery pack when the second battery pack is received by the second battery pack interface.

2. The charger of claim 1, further comprising a controller and a sensor;
optionally, the controller is configured to:
receive a signal from the sensor indicative of a characteristic of at least one selected from a group consisting of the first secondary winding and the second secondary winding, and
control the primary driver circuit based on the signal.

3. The charger of claim 1, further comprising a first charger control circuit configured to:
determine a first output voltage of the first secondary winding; and
regulate, in response to the first output voltage, the first nominal charging voltage;
optionally, further comprising a second charger control circuit configured to: determine a second output voltage of the second secondary winding; and
regulate, in response to the second output voltage, the second nominal charging voltage.

4. The charger of claim 1, further comprising a current sensor connected to the first secondary winding or the second secondary winding;
preferably the current sensor is configured to: sense a first charging
current supplied to the first battery pack; and sense a second
charging current supplied to the second battery pack.

5. The charger of claim 4, wherein the first secondary winding generates the first nominal charging voltage based on the first charging current, and
wherein the second secondary winding generates the second nominal charging voltage based on the second charging current.

6. The charger of claim 1, wherein the primary driver circuit, the first secondary winding, and the second secondary winding form an LLC converter.

7. A method of operating a charger, comprising:
receiving, via a first battery pack interface, a first battery pack;
receiving, via a second battery pack interface, a second battery pack, the second battery pack interface being different than the first battery pack interface;
receiving, via a primary driver circuit, power from an external power supply, the primary driver circuit including a primary winding;
connecting, via the first battery pack interface, a first secondary winding to the first battery pack interface;
receiving, via the first secondary winding, power from the primary winding;
generating, via the first secondary winding, a first nominal charging voltage for supply to the first battery pack when the first battery pack is received by the first battery pack interface;
connecting, via the second battery pack interface, a second secondary winding to the second battery pack interface;
receiving, via the second secondary winding, power from the primary winding; and
generating, via the second secondary winding, a second nominal charging voltage for supply to the second battery pack when the second battery pack is received by the second battery pack interface.

8. The method of claim 7, further comprising:
receiving, via a controller, a signal from a sensor indicative of a characteristic of at least one selected from a group consisting of the first secondary winding and the second secondary winding, and
controlling, via the controller, the primary driver circuit based on the signal.

9. The method of claim 7, wherein the charger further includes a first charger control circuit, the method further comprising:
determining, via the first charger control circuit, a first output voltage of the first secondary winding; and
regulating, via the first charger control circuit and in response to the first output voltage, the first nominal charging voltage.

10. The method of claim 9, wherein the charger further includes a second charger control circuit, the method further comprising:
determining, via the second charger control circuit, a second output voltage of the second secondary winding; and
regulating, via the second charger control circuit and in response to the second output voltage, the second nominal charging voltage.

11. The method of claim 7, wherein the charger further includes a current sensor connected to the first secondary winding or the second secondary winding;
preferably further comprising:
sensing, via the current sensor, a first charging current supplied to the first battery pack; and
pack. sensing, via the current sensor, a second charging current supplied to the second battery

12. The method of claim 11, wherein the first secondary winding generates the first nominal charging voltage based on the first charging current, and
wherein the second secondary winding generates the second nominal charging voltage based on the second charging current.

13. A charger comprising:
a battery pack interface configured to receive a first battery pack having a first battery pack interface and receive a second battery pack having a second battery pack interface, the second battery pack interface being different than the first battery pack interface;
a primary driver circuit for receiving power from an external power supply, the primary driver circuit including a primary winding;
in response to the battery pack interface receiving the first battery pack, a first secondary winding is connected to the first battery pack interface for receiving power from the primary winding and generating a first nominal charging voltage for supply to the first battery pack; and
in response to the battery pack interface receiving the second battery pack, a second secondary winding is connected to the second battery pack interface for receiving power from the primary winding and generating a second nominal charging voltage for supply to the second battery pack.

14. The charger of claim 13, further comprising a controller and a sensor;
optionally the controller is configured to:
receive a signal from the sensor indicative of a characteristic of at least one selected from a group consisting of the first secondary winding and the second secondary winding, and
control the primary driver circuit based on the signal.

15. The charger of claim 13, further comprising a first charger control circuit configured to: determine a first output voltage of the first secondary winding; and
regulate, in response to the first output voltage, the first nominal charging voltage.
